(19) Europäisches Patentamt
European Patent Office
Office européen des brevets

(11) Veröffentlichungsnummer : **0 055 838**
**B1**

(12) # EUROPÄISCHE PATENTSCHRIFT

(45) Veröffentlichungstag der Patentschrift : **25.07.84**

(51) Int. Cl.³ : **C 09 K 3/34**, C 09 B 31/02, C 09 B 33/02, C 09 B 35/02

(21) Anmeldenummer : **81110568.3**

(22) Anmeldetag : **18.12.81**

(54) **Flüssigkristallines Material enthaltend Disazofarbstoffe.**

(30) Priorität : **30.12.80 DE 3049454**

(43) Veröffentlichungstag der Anmeldung : **14.07.82 Patentblatt 82/28**

(45) Bekanntmachung des Hinweises auf die Patenterteilung : **25.07.84 Patentblatt 84/30**

(84) Benannte Vertragsstaaten : **CH DE FR GB IT LI**

(56) Entgegenhaltungen :
**EP-A- 0 043 904**
**DE-A- 2 627 215**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Claussen, Uwe, Dr.**
**Carl-Rumpff-Strasse 29**
**D-5090 Leverkusen 1 (DE)**

**EP 0 055 838 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft flüssigkristallines Material enthaltend Disazofarbstoffe. Die flüssigkristallinen Materialien finden Verwendung in Displays.

Unter Displays werden hier opto-elektronische Anzeigeelemente verstanden, die in der Regel aus 2 parallelen, im Abstande von 5-50 μm angeordneten Platten bestehen, von denen wenigstens eine aus lichturchlässigem Material hergestellt ist. An den Innenseiten der Platten werden Elektroden angebracht, der Raum zwischen ihnen mit dem farbstoffhaltigen, flüssigkristallinen Material gefüllt. Der Aufbau und die Herstellung der optoelektronischen Anzeige ist bekannt (Kelker, Hatz, Handbook of Liquid Crystals S. 611 ff ; 1980).

Ebenfalls ist bekannt, daß man in das flüssigkristalline Material ausgesuchte Farbstoffe einbetten kann, die den vom äußeren angelegten Feld bewirkten Richtungs- und Ordnungsänderungen des flüssigkristallinen Materials folgen (sog. guest-host-Wechselwirkung). Diese besondere Eigenschaft macht geeignete Farbstoffe selten, wenn man neben den genannten dichroitischen Eigenschaften zusätzlich Echtheiten verlangt, die eine technische Nutzung des Effekts ermöglichen. Wichtige Voraussetzungen hierfür sind die Lichtechtheit, eine ausreichende Löslichkeit und die Verträglichkeit mit anderen Farbstoffen.

In der Literatur sind zahlreiche geeignete Einzelfarbstoffe beschrieben. So sind auch häufig Azofarbstoffe genannt worden (R. J. Cox : Mol. Crystals-Liquid Crystals, 1979, S. 1-32).

Beim Einsatz von Azoverbindungen in flüssigkristallinen Materialien geht man von der Überlegung aus, daß mit zunehmender Länge des Moleküls oder mit steigendem intramolekularen Charge-transfer der Ordnungsgrad des Moleküls zunimmt. (F. Jones ; R. Reeve : J. Soc Dyers Col. 1979, S. 352-357). Folgerichtig hat man sich bemüht, entweder möglichst langgestreckte Verbindungen, wie sie beispielsweise in der DE-OS 26 27 215 in der Form von Trisazofarbstoffen offenbart wurden, herzustellen, oder « kurze » Monoazofarbstoffe deren Charge-transfer durch polare terminale Substitution, beispielsweise 4 Nitro-4' Aminoazobenzol, maximiert war.

Überraschenderweise wurde nun gefunden, daß Disazofarbstoffe, mit wenig differenzierter Polarität der terminalen Substitution der Formel I

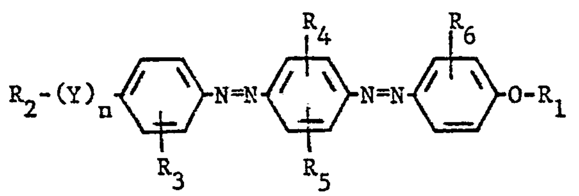

(I)

in der

$R_1$ Alkyl, Aralkyl, Cycloalkyl, Aryl, Alkylsulfonyl, Aralkylsulfonyl, Cycloalkylsulfonyl, Arylsulfonyl, Acyl oder eine Gruppe R—NH—CO— oder R—O—CO—, bei der R für Alkyl, Aralkyl, Cycloalkyl, Aryl steht, wobei die genannten Reste substituiert sein können bezeichnet,

n 0 oder 1 ist,

Y —O— bezeichnet und

$R_2$ für n = 1 die oben angegebenen Bedeutungen für $R_1$ hat und für n = 0 Wasserstoff ist ;

$R_3$, $R_4$, $R_5$, $R_6$ Wasserstoff, gegebenenfalls substituiertes Alkyl, Alkoxy, Halogen oder Cyan bezeichnen.

Die Farbstoffe liefern gelbe bis rotstichig-gelbe Farbtöne. Sie weisen bessere bis vergleichbar gute Ordnungsgrade wie die optimierten Azofarbstofftypen des Standes der technik auf und bieten zusätzlich erhebliche anwendungstechnische Vorteile. Bevorzugte Verwendung in flüssigkristallinen Materialien finden Verbindungen der Formel (I), bei denen $R_1$ und $R_2$ verschieden sind. $R_1$ und $R_2$ (für n = 1) bezeichnen bevorzugt $C_1$-$C_8$-Alkyl, Benzyl, Phenethyl, $C_3$-$C_7$-Cycloalkyl, Phenyl, Naphthyl, $C_1$-$C_8$-Alkylsulfonyl, Benzylsulfonyl, Phenethylsulfonyl, $C_3$-$C_7$-Cycloalkylsulfonyl, Phenylsulfonyl, Naphthylsulfony ($C_1$-$C_8$-Alkyl)-carbonyl, Benzylcarbonyl, Phenethylcarbonyl, ($C_3$-$C_7$-Cycloalkyl)-carbonyl, Benzoyl, Naphthoyl oder eine Gruppe R'—NH—CO— oder R'—O—CO—, bei der R' für $C_1$-$C_8$-Alkyl, Benzyl, Phenethyl, $C_3$-$C_7$-Cycloalkyl, Phenyl oder Naphthyl steht und die für $R_1$ und $R_2$ genannten Reste substituiert sein können ; $R_3$, $R_4$, $R_5$, $R_6$ bezeichnen bevorzugt Wasserstoff, gegebenenfalls substituiertes $C_1$-$C_6$-Alkyl, $C_1$-$C_6$-Alkoxy, Fluor, Chlor, Brom oder Cyan. Bevorzugte Verwendung finden weiterhin Farbstoffe der Formel (I), bei denen $R_1$ und $R_2$ (für n = 1) für $C_1$-$C_8$-Alkyl, Benzyl, das durch Fluor, Chlor, Brom, $C_1$-$C_8$-Alkyl, Trifluormethyl, $C_1$-$C_8$-Alkoxy, Nitro, Cyan, Amino und gegebenenfalls durch $C_1$-$C_8$-Alkyl oder Phenyl mono- oder disubstituiertes Amino substituiert sein kann, Phenyl, das durch Fluor, Chlor, Brom, $C_1$-$C_8$-Alkyl, Trifluormethyl, $C_1$-$C_8$-Alkoxy, Nitro, Cyan, Amino und gegebenenfalls durch $C_1$-$C_8$-Alkyl oder Phenyl mono- oder disubstituiertes Amino substituiert sein kann, $C_1$-$C_8$-Alkylsulfonyl oder eine Gruppe R—NH—CO— oder R—O—CO— steht, bei der R $C_1$-$C_8$-Alkyl, Cyclohexyl oder Phenyl bezeichnet oder $R_2$ (für n = 0) für Wasserstoff steht. Bevorzugt sind weiterhin Farbstoffe

gemäß Formel I, bei denen $R_3$, $R_4$, $R_5$ für Wasserstoff, $C_1$-$C_4$-Alkyl oder $C_1$-$C_4$-Alkoxy stehen. Besonders bevorzugt sind Verbindungen der Formel I, in der $R_1$ und $R_2$ voneinander verschieden sind und einer dieser Reste für Benzyl, das durch Fluor, Chlor, Brom, $C_1$-$C_8$-Alkyl, Trifluormethyl, $C_1$-$C_8$-Alkoxy, Nitro, Cyan, Amino und gegebenenfalls durch $C_1$-$C_8$-Alkyl oder Phenyl mono- oder disubstituiertes Amino substituiert sein kann, steht.

Die erfindungsgemäßen Farbstoffe sind bekannt oder lassen sich nach bekannten Verfahren herstellen. Zur Synthese unsymmetrisch substituierter Disazofarbstoffe diazotiert man Phenoletheramine und kuppelt auf eine Mittelkomponente mit geschützter Aminogruppe, z. B. Anilinmethansulfonsäure in saurem oder alkalischem Milieu. Die Schutzgruppe wird durch alkalische oder saure Verseifung entfernt und die freigesetzte Aminogruppe diazotiert. Man kuppelt in alkalischem Milieu auf ein Phenol und erhält ein Produkt, das sich mit Alkylantien, wie Benzylhalogeniden, aktivierten Estern, Alkylhalogeniden oder Diazomethan, mit Acylierungsmitteln, wie Acylanhydriden, Acylhalogeniden, Phosgen oder Isocyanaten, Kohlensäureestern und Aryl- oder Alkylsulfonsäurehalogeniden zu den Endprodukten umsetzen läßt. Symmetrische Verbindungen sind leichter zugänglich über ein tetrazotiertes Diamin und 2-fache Kupplung auf Phenol. Die terminalen Hydroxylgruppen werden in einem Folgeschritt mit alkylierenden oder acylierenden Verbindungen verschlossen. In aller Regel sind die so hergestellten Verbindungen für den Einsatz in Displays nicht rein genug. Vielmehr hat es sich als zweckmäßig erwiesen, sie durch chromatographische Verfahren, vorzugsweise Säulen- oder Verteilungschromatographie, zu reinigen. Die erfindungsgemäßen Farbstoffe lassen sich in flüssigkristallinen Materialien gelöst verwenden. Bevorzugt ist der Einsatz in Mischungen von Farbstoffen. Als flüssigkristalline Materialien kommen besonders solche mit positiver dielektrischer Anisotropie in Betracht. Beispielsweise seien Mischungen von 4(4-Cyano-Phenyl-) alkylcyclohexanen genannt, wobei Alkyl Propyl- (25 %) n-Pentyl- (37 %) und n-Heptyl- (25 %) bedeutet und als zusätzliche Komponente 4(4'-Cyanobiphenyl-)n-pentylcyclohexan (12 %) verwendet wird, oder Mischungen von 4(4'-Cyanobiphenyl)alkyl- und alkoxy-Verbindungen, beispielsweise mit der Bedeutung n-Pentyl- (53 %) n-Heptyl- (25 %) für Alkyl und Octyloxy- (14 %) für Alkoxy und 4(4'-Cyano-Terphenyl)alkylverbindungen, z. B. n-Pentyl- (8 %) für Alkyl. Gleichfalls geeignet sind Mischungen, die 4-Cyanophenyl-pyrimidine enthalten. Das flüssigkristalline Material enthält die Farbstoffe gemäß Formel I vorzugsweise zu etwa 0,01 bis etwa 30 Gew.-%, besonders bevorzugt zu etwa 0,5 bis etwa 5 Gew.-%.

Die in den flüssigkristallinen Materialien gelösten Farbstoffe und ihre Mischungen, insbesondere mit Anthrachinonfarbstoffen, lassen sich in opto-elektronischen Anzeigen verwenden.

Beispiel 1

12,3 g Anisidin werden mit 7 g Natriumnitrit diazotiert und bei pH 4,5 auf 19 g Anilinmethansulfonsäure bei 5° gekuppelt. Nach 4 h saugt man den ausgefallenen Farbstoff ab. Das feuchte Produkt wird in 100 ml halbkonzentrierter Salzsäure 40 min auf 60-80° erwärmt. Man gibt auf 200 g Eis und diazotiert mit 6,5 g Natriumnitrit, neutralisiert die Lösung vorsichtig und kuppelt bei pH 7,5-8,5 auf 10 g Phenol. Nach 3 h saugt man den Farbstoff ab, wäscht mit Wasser, dann mit wenig Methanol und trocknet. Man erhält 28 g Disazofarbstoff als rotes Pulver. 7 g des erhaltenen Produkts werden in 40 ml Methylethylketon gelöst und 2 g Kaliumcarbonat sowie 5 g Benzylchlorid hinzugesetzt. Man erhitzt zum Sieden, bis eine sauer gestellte Probe keinen Farbumschlag mehr gibt. Nach Beendigung der Reaktion wird abgesaugt, mit Wasser gewaschen und getrocknet. Zur Reinigung wird der Farbstoff 1 : 100 am Kieselgel chromatographiert und mit Chloroform eluiert.

Beispiel 2-12

Ganz analog dem im Beispiel 1 angegebenen Verfahren erhält man folgende Verbindungen :

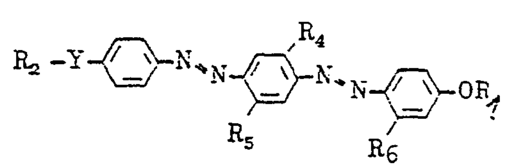

| | $R_2$ -Y | $R_1$ | $R_4$ | $R_5$ | $R_6$ | Ordnungsgrad |
|---|---|---|---|---|---|---|
| 2 | 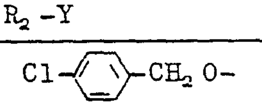 | $CH_3$ | H | H | H | 0,66 |
| 3 | 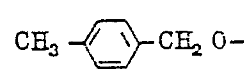 | $C_2H_5$ | H | H | H | 0,65 |

(Fortsetzung)

| | $R_2$-Y | $R_1$ | $R_4$ | $R_5$ | $R_6$ | Ordnungsgrad |
|---|---|---|---|---|---|---|
| 4 | H | $CH_2$ - 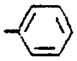 | H | H | H | 0,68 |
| 5 | $CH_3O$ | $CH_2$ - 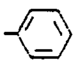 | $OCH_3$ | | H | 0,69 |
| 6 | 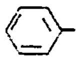 $-CH_2O$ | $CH_3$ | $OCH_3$ | $OCH_3$ | H | 0,61 |
| 7 | H | $CH_2$ - 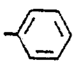 | H | H | $CH_3$ | 0,62 |
| 8 | $CH_3SO_2-O$ | $CH_2$ - 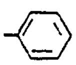 | H | H | H | 0,63 |
| 9 | $H_3C$- 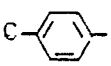 - | $CH_2$ - 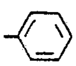 | H | H | H | 0,66 |
| 10 | 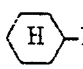 -NHCO- | $CH_2$ - 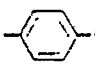 $-CH_3$ | H | H | H | 0,61 |
| 11 | 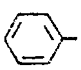 -CO O | $CH_2$ - 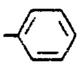 | H | H | H | 0,59 |
| 12 | 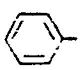 -CO O | $CH_3$ | $CH_3$ | H | H | 0,64 |
| 13 | $CH_3O$ | $CH_2$ - 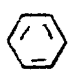 | H | $OCH_3$ | H | 0,69 |

**Ansprüche**

1. Flüssigkristallines Material enthaltend einen Disazofarbstoff der Formel

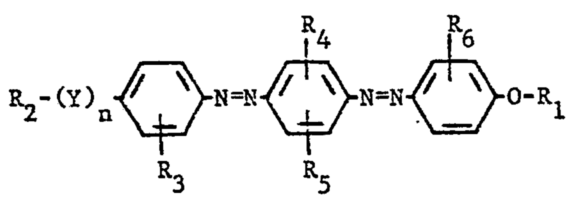

(I)

in der

$R_1$ Alkyl, Aralkyl, Cycloalkyl, Aryl, Alkylsulfonyl, Aralkylsulfonyl, Cycloalkylsulfonyl, Arylsulfonyl, Acyl oder eine Gruppe R—NH—CO— oder R—O—CO—, bei der R für Alkyl, Aralkyl, Cycloalkyl, Aryl steht, wobei die genannten Reste substituiert sein können, bezeichnet,

n 0 oder 1 ist,

Y —O— bezeichnet und

$R_2$ für n = 1 die oben angegebenen Bedeutungen für $R_1$ hat und für n = 0 Wasserstoff ist und

$R_3$, $R_4$, $R_5$, $R_6$ Wasserstoff, gegebenenfalls substituiertes Alkyl, Alkoxy, Halogen oder Cyan bezeichnen.

2. Flüssigkristallines Material gemäß Anspruch 1, enthaltend einen Disazofarbstoff der Formel I, in der $R_1$ und $R_2$ verschieden sind.

3. Flüssigkristallines Material gemäß den Ansprüchen 1 und 2, enthaltend einen Disazofarbstoff der Formel I, in der $R_1$ und $R_2$ (für n = 1), $C_1$-$C_8$-Alkyl, Benzyl, Phenethyl, $C_3$-$C_7$-Cycloalkyl, Phenyl, Naphthyl, $C_1$-$C_8$-Alkylsulfonyl, Benzylsulfonyl, Phenethylsulfonyl, $C_3$-$C_7$-Cycloalkylsulfonyl, Phenylsulfonyl, Naphthylsulfonyl, ($C_1$-$C_8$-Alkyl)-carbonyl, Benzylcarbonyl, Phenethylcarbonyl, ($C_3$-$C_7$-Cycloalkyl)-carbonyl, Benzoyl, Naphthoyl oder eine Gruppe R'—NH—CO— oder R'—O—CO—, bei der R' für $C_1$-$C_8$-Alkyl,

Benzyl, Phenethyl, $C_3$-$C_7$-Cycloalkyl, Phenyl oder Naphthyl steht und die für $R_1$ und $R_2$ genannten Reste substituiert sein können, bezeichnen und $R_3$, $R_4$, $R_5$, $R_6$ Wasserstoff, gegebenenfalls substituiertes $C_1$-$C_6$-Alkyl, $C_1$-$C_6$-Alkoxy, Fluor, Chlor, Brom oder Cyan, bezeichnen.

4. Flüssigkristallines Material gemäß den Ansprüchen 1 und 2, enthaltend einen Disazofarbstoff der Formel I, in der $R_1$ und $R_2$ (für n = 1) für $C_1$-$C_8$-Alkyl, Benzyl, das durch Fluor, Chlor, Brom, $C_1$-$C_8$-Alkyl, Trifluormethyl, $C_1$-$C_8$-Alkoxy, Nitro, Cyan, Amino und gegebenenfalls durch $C_1$-$C_8$-Alkyl oder Phenyl mono- oder disubstituiertes Amino substituiert sein kann, Phenyl, das durch Fluor, Chlor, Brom, $C_1$-$C_8$-Alkyl, Trifluormethyl, $C_1$-$C_8$-Alkoxy, Nitro, Cyan, Amino und gegebenfalls durch $C_1$-$C_8$-Alkyl oder Phenyl mono- oder disubstituiertes Amino substituiert sein kann, $C_1$-$C_8$-Alkylsulfonyl oder eine Gruppe R—NH—CO— oder R—O—CO— steht, bei der R $C_1$-$C_8$-Alkyl, Cyclohexyl oder Phenyl stehen oder $R_2$ (für n = 0) Wasserstoff bezeichnet.

5. Flüssigkristallines Material gemäß den Ansprüchen 1, 2 und 4, enthaltend einen Disazofarbstoff der Formel I, in der $R_3$, $R_4$, $R_5$ für Wasserstoff, $C_1$-$C_4$-Alkyl oder $C_1$-$C_4$-Alkoxy stehen.

6. Flüssigkristallines Material gemäß Anspruch 1, enthaltend einen Disazofarbstoff der Formel I, in der $R_1$ und $R_2$ voneinander verschieden sind und einer dieser Reste für Benzyl, das durch Fluor, Chlor, Brom, $C_1$-$C_8$-Alkyl, Trifluormethyl, $C_1$-$C_8$-Alkoxy, Nitro, Cyan, Amino und gegebenenfalls durch $C_1$-$C_8$-Alkyl oder Phenyl mono- oder disubstituiertes Amino substituiert sein kann, steht.

7. Flüssigkristallines Material gemäß den Ansprüchen 1-6, enthaltend etwa 0,01 bis etwa 30 Gew.-%, vorzugsweise etwa 0,5 bis etwa 5 Gew.-% an Disazofarbstoff.

**Claims**

1. Liquid crystal material containing a disazo dyestuff of the formula

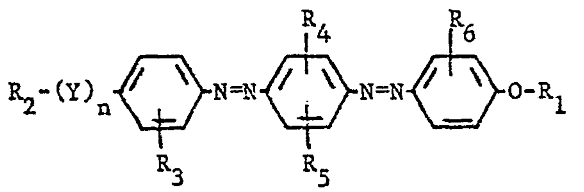

(I)

in which

$R_1$ designates alkyl, aralkyl, cycloalkyl, aryl, alkylsulphonyl, aralkylsulphonyl, cycloalkylsulphonyl, arylsulphonyl, acyl or a R—NH—CO— or R—O—CO— group, in which R represents alkyl, aralkyl, cycloalkyl or aryl, it being possible for the radicals mentioned to be substituted,

n is 0 or 1,

Y designates —O— and

$R_2$ has the meaning given above for $R_1$ if n = 1, or is hydrogen if n = 0 and

$R_3$, $R_4$, $R_5$ and $R_6$ designate hydrogen, optionally substituted alkyl, alkoxy, halogen or cyano.

2. Liquid crystal material according to Claim 1, containing a disazo dyestuff of the formula I in which $R_1$ and $R_2$ are different.

3. Liquid crystal material according to Claims 1 and 2, containing a disazo dyestuff of the formula I, in which $R_1$ and $R_2$ (for n = 1) designate $C_1$-$C_8$-alkyl, benzyl, phenethyl, $C_3$-$C_7$-cycloalkyl, phenyl, naphthyl, $C_1$-$C_8$-alkylsulphonyl, benzylsulphonyl, phenethylsulphonyl, $C_3$-$C_7$-cycloalkylsulphonyl, phenylsulphonyl, naphthylsulphonyl, ($C_1$-$C_8$-alkyl)-carbonyl, benzylcarbonyl, phenethylcarbonyl, ($C_3$-$C_7$-cycloalkyl)-carbonyl, benzoyl, naphthoyl or a R'—NH—CO— or R'—O—CO— group, in which R' represents $C_1$-$C_8$-alkyl, benzyl, phenethyl, $C_3$-$C_7$-cycloalkyl, phenyl or naphthyl and the radicals mentioned for $R_1$ and $R_2$ can be substituted, and $R_3$, $R_4$ $R_5$ and $R_6$ designate hydrogen, optionally substituted $C_1$-$C_6$-alkyl or $C_1$-$C_6$-alkoxy, fluorine, chlorine, bromine or cyano.

4. Liquid crystal material according to Claims 1 and 2, containing a disazo dyestuff of the formula I in which $R_1$ and $R_2$ (for n = 1) represent $C_1$-$C_8$-alkyl, benzyl, which can be substituted by fluorine, chlorine, bromine, $C_1$-$C_8$-alkyl, trifluoromethyl, $C_1$-$C_8$-alkoxy, nitro, cyano, amino or amino which is optionally monosubstituted or disubstituted by $C_1$-$C_8$-alkyl or phenyl, or phenyl which can be substituted by fluorine, chlorine, bromine, $C_1$-$C_8$-alkyl, trifluoromethyl, $C_1$-$C_8$-alkoxy, nitro, cyano, amino or amino which is optionally monosubstituted or disubstituted by $C_1$-$C_8$-alkyl or phenyl, or $C_1$-$C_8$-alkylsulphonyl or a R—NH—CO— or R—O—CO— group, in which R represents $C_1$-$C_8$-alkyl, cyclohexyl or phenyl, or $R_2$ (for n = 0) designates hydrogen.

5. Liquid crystal material according to Claims 1, 2 and 4, containing a disazo dyestuff of the formula I in which $R_3$, $R_4$ and $R_5$ represent hydrogen, $C_1$-$C_4$-alkyl or $C_1$-$C_4$-alkoxy.

6. Liquid crystal material according to Claim 1, containing a disazo dyestuff of the formula I in which $R_1$ and $R_2$ are different from each other and one of these radicals represents benzyl which can be substituted by fluorine, chlorine, bromine, $C_1$-$C_8$-alkyl, trifluoromethyl, $C_1$-$C_8$-alkoxy, nitro, cyano, amino

or amino which is optionally monosubstituted or disubstituted by $C_1$-$C_8$-alkyl or phenyl.

7. Liquid crystal material according to Claims 1-6, containing about 0.01 to about 30 % by weight, preferably about 0.5 to 5 % by weight of a disazo dyestuff.

**Revendications**

1. Matériau cristallin liquide contenant un colorant bisazoïque de formule

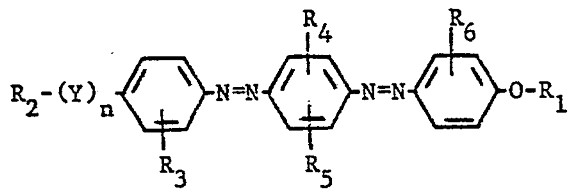

(I)

dans laquelle

$R_1$ représente un groupe alkyle, arylalkyle, cycloalkyle, aryle, alkylsulfonyle, arylalkylsulfonyle, cycloalkylsulfonyle, arylsulfonyle, acyle ou un groupe R—NH—CO— ou R—O—CO—, dans lequel R représente un groupe alkyle, arylalkyle, cycloalkyle, aryle, les restes mentionnés pouvant être substitués,

n est égal à 0 ou 1,

Y représente —O— et

$R_2$ a les significations indiquées ci-dessus pour $R_1$ lorsque n = 1 et représente l'hydrogène lorsque n = 0 et

$R_3$, $R_4$, $R_5$, $R_6$ représentent l'hydrogène, un groupe alkyle éventuellement substitué, alcoxy, un halogène ou un groupe cyano.

2. Matériau cristallin liquide selon la revendication 1 contenant un colorant bisazoïque de formule I, dans laquelle $R_1$ et $R_2$ sont différents.

3. Matériau cristallin liquide selon les revendications 1 et 2 contenant un colorant bisazoïque de formule I, dans laquelle $R_1$ et $R_2$ (pour n = 1) représentent alkyle en $C_1$-$C_8$, benzyle, phénéthyle, cycloalkyle en $C_3$-$C_7$, phényle, naphtyle, alkylsulfonyle en $C_1$-$C_8$, benzylsulfonyle, phénéthylsulfonyle, cycloalkylsulfonyle en $C_3$-$C_7$, phénylsulfonyle, naphtylsulfonyle, (alkyl en $C_1$-$C_8$)carbonyle, benzylcarbonyle, phénéthylcarbonyle, (cycloalkyl en $C_3$-$C_7$)carbonyle, benzoyle, naphtoyle ou un groupe R'—NH—CO— ou R'—O—CO—, dans lequel R' représente alkyle en $C_1$-$C_8$, benzyle, phénéthyle, cycloalkyle en $C_3$-$C_7$, phényle ou naphtyle et les restes mentionnés pour $R_1$ et $R_2$ peuvent être substitués et $R_3$, $R_4$, $R_5$, $R_6$ représentent l'hydrogène, alkyle en $C_1$-$C_6$ éventuellement substitué, alcoxy en $C_1$-$C_6$, fluor, chlore, brome ou cyano.

4. Matériau cristallin liquide selon les revendications 1 et 2 contenant un colorant bisazoïque de formule I, dans laquelle $R_1$ et $R_2$ (pour n = 1) représentent alkyle en $C_1$-$C_8$, benzyle, qui peut être substitué par le fluor, le chlore, le brome ou alkyle en $C_1$-$C_8$, trichlorométhyle, alcoxy en $C_1$-$C_8$, nitro, cyano, amino et amino éventuellement mono- ou disubstitué par alkyle en $C_1$-$C_8$ ou phényle, phényl qui peut être substitué par le fluor, le chlore, le brome ou alkyle en $C_1$-$C_8$, trifluorométhyle, alcoxy en $C_1$-$C_8$, nitro, cyano, amino et amino éventuellement mono- ou disubstitué par alkyle en $C_1$-$C_8$ ou phényle, alkylsulfonyle en $C_1$-$C_8$ ou un groupe R—NH—CO— ou R—O—CO— dans lequel R représente alkyle en $C_1$-$C_8$, cyclohexyle ou phényle ou $R_2$ (pour n = 0) représente l'hydrogène.

5. Matériau cristallin liquide selon les revendications 1, 2 et 4 contenant un colorant bisazoïque de formule I, dans laquelle $R_2$, $R_3$, $R_4$, $R_5$ représentent l'hydrogène, alkyle en $C_1$-$C_4$ ou alcoxy en $C_1$-$C_4$.

6. Matériau cristallin liquide selon la revendication 1 contenant un colorant bisazoïque de formule I, dans laquelle $R_1$ et $R_2$ sont différents l'un de l'autre et l'un de ces restes représente un groupe benzyle qui peut être substitué par le fluor, le chlore, le brome ou alkyle en $C_1$-$C_8$, trifluorométhyle, alcoxy en $C_1$-$C_8$, nitro, cyano, amino et amino éventuellement mono- ou disubstitué par alkyle en $C_1$-$C_8$ ou phényle.

7. Matériau cristallin liquide selon les revendications 1 à 6 contenant environ 0,01 à 30 % en poids de colorant bisazoïque, de préférence environ 0,5 à 5 % en poids.